# EUROPÄISCHE PATENTANMELDUNG

(11) **EP 3 257 405 A1**
(43) Veröffentlichungstag der Anmeldung: **20.12.2017**
(21) Anmeldenummer: 17175401.3
(22) Anmeldetag: 12.06.2017
(51) Int. Cl.: A47F 5/08, A47B 96/07, F16M 11/04, F16M 11/20, A47B 96/06

(54) **WINKELVERSTELLBARE KONSOLE**

(30) Priorität: 14.06.2016 DE 102016110841
(71) Anmelder: fischerwerke GmbH & Co. KG, 72178 Waldachtal (DE)
(72) Erfinder: Kosanke, Timo, 72202 Nagold (DE)
(74) Vertreter: Suchy, Ulrich Johannes

(57) **Zusammenfassung**

Die Erfindung betrifft eine winkelverstellbare Konsole (1) mit einem an einer Wand befestigbaren Grundteil (2) und einem schwenkbaren Ausleger (3). Zu einer Winkelverstellung in Stufen schlägt die Erfindung ein Gesperre (18) mit kreisbogenförmigen Langlöchern (12) um eine Schwenkachse vor, die kreisförmige Verbreiterungen (13) aufweisen, die durch Engstellen (14) verbunden sind. Eine durch die Langlöcher (12) gesteckte Schraube (15), auf deren Schraubenschaft (16) Lochscheiben (17) als Riegel (19) des Gesperres (18) angeordnet sind, ermöglicht eine Winkelverstellung des Auslegers (3) in Stufen, wenn sich die Lochscheiben (17) außerhalb der Verbreiterungen (13) der Langlöcher (12) befinden, und legt die Winkelstellung des Auslegers (3) fest, wenn sich die Lochscheiben (17) in deckungsgleichen Verbreiterungen (13) der Langlöcher (12) befinden. Eine stufenlose Winkelverstellung ist mit einer zusätzlichen Stellschraube möglich.

## Beschreibung

Die Erfindung betrifft eine winkelverstellbare Konsole mit den Merkmalen des Oberbegriffs des Anspruchs 1.

Aus dem US Patent 3,561,713 ist eine winkelverstellbare Konsole mit einem Grundteil, das zur Befestigung an beispielsweise einer Wand vorgesehen ist, und einem an dem Grundteil vertikal schwenkbar gelagerten Ausleger bekannt. Durch die Schwenkbarkeit lässt sich der Ausleger horizontal ausrichten, wenn eine Wand, an der das Grundteil befestigt ist, nicht vertikal, sondern schräg ist. In einem dem Grundteil zugewandten Ende weist der Ausleger ein kreisbogenförmiges Langloch auf, in dessen Zentrum sich eine Schwenkachse des Auslegers befindet. Von dem Langloch gehen kurze Abzweigungen nach innen in Richtung der Schwenkachse ab. Das Langloch wird von einem Bolzen durchgriffen, der starr am Grundteil angeordnet ist. Ein weiterer Bolzen, der ebenfalls starr am Grundteil angeordnet ist, bildet ein Schwenklager für den Ausleger und definiert die Schwenkachse. Er durchgreift ein kurzes, L-förmiges Langloch. Zu einer Winkelverstellung wird der Ausleger mit dem L-förmigen Langloch auf dem weiteren Bolzen angehoben und anschließend vom Grundteil weg bewegt. Dadurch kommt der eine Bolzen aus einer der Abzweigungen des Langlochs frei und der Ausleger kann nach oben oder unten geschwenkt werden. Weist er eine gewünschte Schwenkstellung auf, wird er wieder auf das Grundteil zu bewegt und anschließend abgesenkt. Dabei gelangt der eine Bolzen in eine der Abzweigungen des Langlochs und hält den Ausleger in seiner Winkelstellung am Grundteil. Der Ausleger der bekannten Konsole lässt sich nur in Winkelschritten verstellen.

Aufgabe der Erfindung ist, eine Konsole mit stufenloser Winkelverstellung vorzuschlagen.

Gelöst wird diese Aufgabe durch eine winkelverstellbare Konsole mit den Merkmalen des Anspruchs 1. Die erfindungsgemäße Konsole weist ein Grundteil und einen in Bezug auf das Grundteil schwenkbaren Ausleger auf. Das Grundteil kann ein- oder mehrteilig sein und ist zur Befestigung an beispielsweise einer Wand oder einem Pfosten vorgesehen. Das Grundteil wird so befestigt, dass der Ausleger um eine horizontale oder etwa horizontale Schwenkachse, das heißt vertikal, schwenkbar ist. Die Richtungsangaben "horizontal" und "vertikal" beziehen sich hier auf eine vorgesehene Befestigungsanlage der Konsole bzw. ihres Grundteils an einer Wand. Wie bei der bekannten Konsole ist der Ausleger der erfindungsgemäßen Konsole in Stufen in Bezug auf das Grundteil schwenkbar, wobei Mittel für eine Winkeleinstellung in Stufen anders ausgeführt sein können als bei der bekannten Konsole. Zusätzlich weist die erfindungsgemäße Konsole eine stufenlose Winkeleinstellung auf. Dadurch lässt sich der Ausleger der erfindungsgemäßen Konsole in Bezug auf das Grundteil in Stufen etwa horizontal ausrichten und durch die stufenlose Winkeleinstellung genau horizontal ausrichten.

Für die Winkeleinstellung des Auslegers in Stufen sieht eine Ausgestaltung der Erfindung ein Gesperre mit einem Riegel und Aufnahmen für den Riegel vor, mit denen der Riegel in Eingriff bringbar ist. Es können die Aufnahmen am Grundteil und der Riegel am Ausleger oder umgekehrt vorgesehen sein. Der Eingriff des Riegels in einer der Aufnahmen des Gesperres hält den Ausleger der erfindungsgemäßen Konsole in seinem Winkel in Bezug auf das Grundteil. Vorzugsweise hält der Eingriff des Riegels in einer der Aufnahmen des Gesperres den Ausleger gegen Verschwenken in beiden Richtungen, also gegen Schwenken nach oben und nach unten. Grundsätzlich genügt allerdings, wenn der Eingriff des Riegels in einer Aufnahme den Ausleger nach Art eines Widerlagers gegen ein Schwenken in Schwerkraftrichtung nach unten hält. Zum Verschwenken wird der Riegel außer Eingriff von der Aufnahme gebracht, der Ausleger geschwenkt und der Riegel wieder in Eingriff mit einer der Aufnahmen des Gesperres gebracht, um den Ausleger in seiner Winkelstellung zu halten. Unter einem "Gesperre" im Sinne der Erfindung ist eine Einrichtung zu verstehen, die den Ausleger durch Formschluss gegen Schwenken in einer von mehreren wählbaren Winkelstellungen hält.

Als Gesperre sieht eine Ausgestaltung der Erfindung ein Langloch mit Verbreiterungen als Aufnahmen für den Riegel vor, die durch Engstellen verbunden sind. Die Verbreiterungen sind vorzugsweise kongruent und der Riegel ist so breit oder so angeordnet, dass er nicht durch die Engstellen treten kann. Der Riegel lässt sich zur Seite außer Eingriff aus den Verbreiterungen des Langlochs bringen, die die Aufnahmen für den Riegel bilden. Eine andere Möglichkeit ist, den Riegel durch Schwenken wahlweise in eine Stellung, in der er durch die Engstellen des Langlochs durchtreten kann, oder in eine andere Stellung, in der er nicht durch die Engstellen durchtreten kann, sondern in der jeweiligen Verbreiterung gehalten ist, zu bringen. Das Langloch kann beispielsweise bogenförmig oder gerade sein.

Eine Weiterbildung sieht eine Führung für den Riegel vor, die das Langloch durchsetzt, so dass der Riegel in die Verbreiterungen des Langlochs hinein und aus ihnen heraus bewegbar ist.

Ein Langloch mit Abzweigungen als Aufnahmen für den Riegel, in die der Riegel einbringbar ist, ist für das Gesperre ebenfalls möglich.

Eine Ausgestaltung der Erfindung sieht eine Wippe vor, die in Bezug auf das Grundteil schwenkbar ist. Zudem ist der Ausleger in Bezug auf die Wippe schwenkbar. Diese Ausgestaltung der Erfindung ermöglicht eine stufenlose Schwenkbarkeit der Wippe zusammen mit dem Ausleger in Bezug auf das Grundteil und ein Schwenken des Auslegers in Bezug auf das Grundteil in Stufen oder umgekehrt.

Es genügt grundsätzlich, wenn der Ausleger schwenkbar ist. Das gilt jedenfalls dann, wenn das Langloch des vorstehend erläuterten Gesperres in einem Kreisbogen um eine Schwenkachse des Auslegers verläuft. Eine Ausgestaltung sieht vor, dass der Ausleger zusätzlich zu seiner Schwenkbarkeit in seiner Längsrichtung verschiebbar ist. Mit "in Längsrichtung" ist eine Bewegung zum Grundteil hin oder weg vom Grundteil gemeint. Die Verschiebbarkeit ermöglicht ein gerades oder nicht kreisbogenförmiges Langloch oder ein kreisbogenförmiges Langloch, in dessen Zentrum sich nicht die Schwenkachse des Auslegers befindet.

Zur stufenlosen Winkeleinstellung des Auslegers sieht eine Ausgestaltung der Erfindung eine Stellschraube vor, die beispielsweise in ein Innengewinde geschraubt ist, das am Ausleger oder am Grundteil angeordnet ist und die sich am Grundteil oder am Ausleger abstützt. Die Stellschraube kann vorzugsweise derart angeordnet sein, dass sie senkrecht oder etwa senkrecht oder parallel oder etwa parallel zum Ausleger ist, wenn er horizontal ausgerichtet und das Grundteil an einer vertikalen Wand befestigt ist. Grundsätzlich kann die Schraube in jedem beliebigen Winkel außer radial zur Schwenkachse des Auslegers oder der Wippe angeordnet sein.

Die Erfindung wird nachfolgend anhand in der Zeichnung dargestellter Ausführungsbeispiele näher erläutert. Es zeigen:
- Figur 1: eine winkelverstellbare Konsole gemäß der Erfindung in perspektivischer Darstellung;
- Figur 2: die Konsole aus Figur 1 mit einem gelösten Ausleger in geänderter Winkelstellung;
- Figur 3: die Konsole aus Figur 1 in perspektivischer Darstellung mit anderer Blickrichtung;
- Figur 4: einen alternativen Riegel eines Gesperres der Konsole aus Figuren 1 bis 3;
- Figur 5: ein zweites Ausführungsbeispiel einer winkelverstellbaren Konsole gemäß der Erfindung in perspektivischer Darstellung;
- Figur 6: ein drittes Ausführungsbeispiel einer winkelverstellbaren Konsole gemäß der Erfindung in perspektivischer Darstellung;
- Figur 7: ein viertes Ausführungsbeispiel einer winkelverstellbaren Konsole gemäß der Erfindung in Seitenansicht; und
- Figur 8: ein fünftes Ausführungsbeispiel einer winkelverstellbaren Konsole gemäß der Erfindung in Seitenansicht.

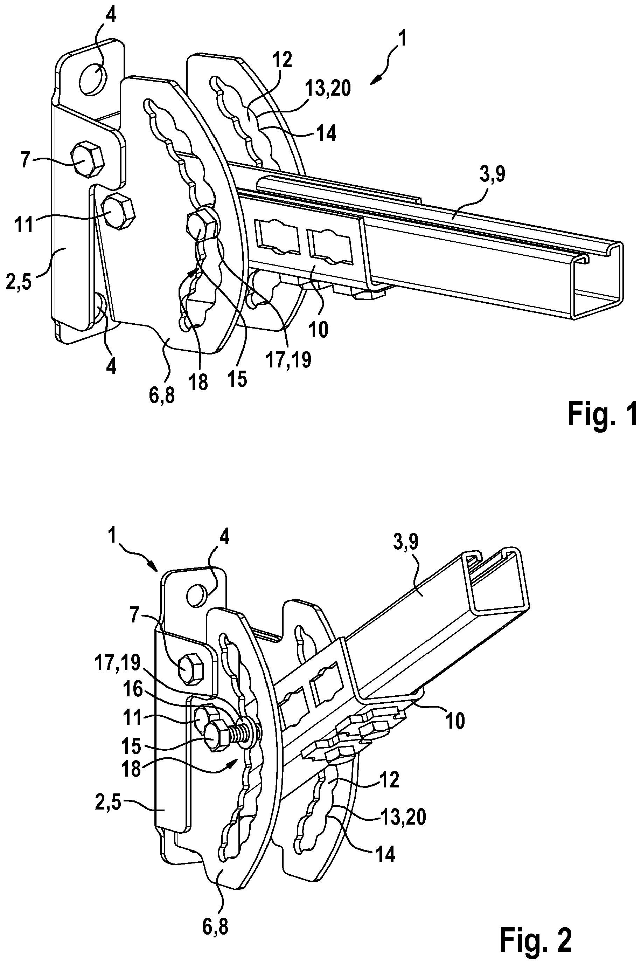

Die in Figur 1 dargestellte, erfindungsgemäße, winkelverstellbare Konsole 1 weist ein Grundteil 2 und einen in Bezug auf das Grundteil 2 schwenkbaren Ausleger 3 auf. Das Grundteil 2 ist ein U-Profil, das in einer Grundseite zwei Löcher 4 zur Befestigung an beispielsweise einer nicht dargestellten Wand mit beispielsweise ebenfalls nicht dargestellten Schrauben und Dübeln aufweist.

Zwischen Seitenwänden 5 des Grundteils 2 ist eine Wippe 6 angeordnet, die im Ausführungsbeispiel ebenfalls als U-Profil ausgeführt ist, dessen Grundseite der Grundseite des Grundteils 2 zugewandt ist. Mit einer ersten Schraube 7, die durch deckungsgleiche Löcher in den Seitenwänden 5 des Grundteils 2 und Seitenwänden 8 der Wippe 6 gesteckt ist, ist die Wippe 6 schwenkbar am Grundteil 2 gelagert. Zur Sicherung der Schraube 7 in den Löchern der Seitenwände 5, 8 des Grundteils 2 und der Wippe 6 ist auf einer einem Schraubenkopf gegenüberliegenden Seite eine Mutter auf die erste Schraube 7 geschraubt, die in der Zeichnung verdeckt und deswegen nicht sichtbar ist. Die erste Schraube 7, die eine Schwenkachse der Wippe 6 definiert, ist parallel zu den Grundseiten des Grundteil 2 und der Wippe 6 und senkrecht zu den Seitenwänden 5, 8 des Grundteils 2 und der Wippe 6 angeordnet.

Der Ausleger 3 weist eine Montageschiene 9 und ein U-Profil als Aufnahme 10 für die Montageschiene 9 auf. Ein Ende der Montageschiene 9 ist in der Aufnahme 10 angeordnet und mit der Aufnahme 10 verschraubt. Die Montageschiene 9 weist ein Rechteckrohrprofil mit einem durchgehenden Längsschlitz in einer Mitte einer Seite auf. An ihr lassen sich mit nicht dargestellten, standardisierten Hammerkopfelementen oder Rechteckmuttern oder sonstigen Befestigern, die durch den Längsschlitz in die Montageschiene 9 eingebracht und durch Schwenken in der Montageschiene 9 quer gestellt werden, Bauteile am Ausleger 3 befestigen.

Die Aufnahme 10 des Auslegers 3 ragt zwischen die Seitenwände 8 der Wippe 6. Ein der Grundseite der Wippe 6 nahes Ende der Aufnahme 10 ist mit einer zweiten Schraube 11 schwenkbar an der Wippe 6 gelagert. Die zweite Schraube 11 ist durch deckungsgleiche Löcher in den Seitenwänden 8 der Wippe 6 und der Aufnahme 10 gesteckt und durch eine Mutter gesichert, die auf einer einem Schraubenkopf gegenüberliegenden Seite auf die zweite Schraube 11 geschraubt ist. Die Mutter ist in der Zeichnung verdeckt und deswegen nicht sichtbar. Die zweite Schraube 11, die eine Schwenkachse des Auslegers 3 definiert, ist parallel zur Grundseite der Wippe 6 und senkrecht zu den Seitenwänden 8 der Wippe 6 angeordnet. Die Schwenkachse des Auslegers 3 an der Wippe 6 und die Schwenkachse der Wippe 6 am Grundteil 2 sind parallel zueinander und weisen einen Abstand voneinander auf. Denkbar ist eine übereinstimmende Schwenkachse des Auslegers 3 an der Wippe 6 und der Wippe 6 am Grundteil 2, indem eine der beiden Schrauben 7, 11 durch deckungsgleiche Löcher in den Seitenwänden 5, 8 des Grundteils 2, der Wippe 6 und der Aufnahme 10 des Auslegers 3 gesteckt wird (nicht dargestellt); die andere der beiden Schrauben 7, 11 entfällt in diesem Fall.

Die Seitenwände 8 der Wippe 6 weisen deckungsgleiche Langlöcher 12 auf, die kreisbogenförmig um die zweite Schraube 11 verlaufen, die die Schwenkachse des Auslegers 3 an der Wippe 6 definiert. Die Langlöcher 12 weisen kreisförmige Verbreiterungen 13 und Engstellen 14 zwischen den Verbreiterungen 13 auf. Durch die Langlöcher 12 in den Seitenwänden 8 der Wippe 6 und durch in der Zeichnung nicht sichtbare Rundlöcher in den Seitenwänden der Aufnahme 10 des Auslegers 3 ist eine dritte Schraube 15 gesteckt, deren Schraubenschaft 16 einen Durchmesser aufweist, der kleiner ist als die Engstellen 14 der Langlöcher 12 breit sind. Die dritte Schraube 15 ist durch eine Mutter gesichert, die auf einer einem Schraubenkopf gegenüberliegenden Seite auf die dritte Schraube 15 geschraubt ist. Die Mutter ist in der Zeichnung verdeckt und deswegen nicht sichtbar. Die dritte Schraube 15, die die beiden Langlöcher 12 der Wippe 6 durchsetzt, ist parallel zu der zweiten Schraube 11, die den Ausleger 3 schwenkbar an der Wippe 6, und zur ersten Schraube 7, die die Wippe 6 schwenkbar am Grundteil 2 der erfindungsgemäßen, winkelverstellbaren Konsole 1 lagern, angeordnet.

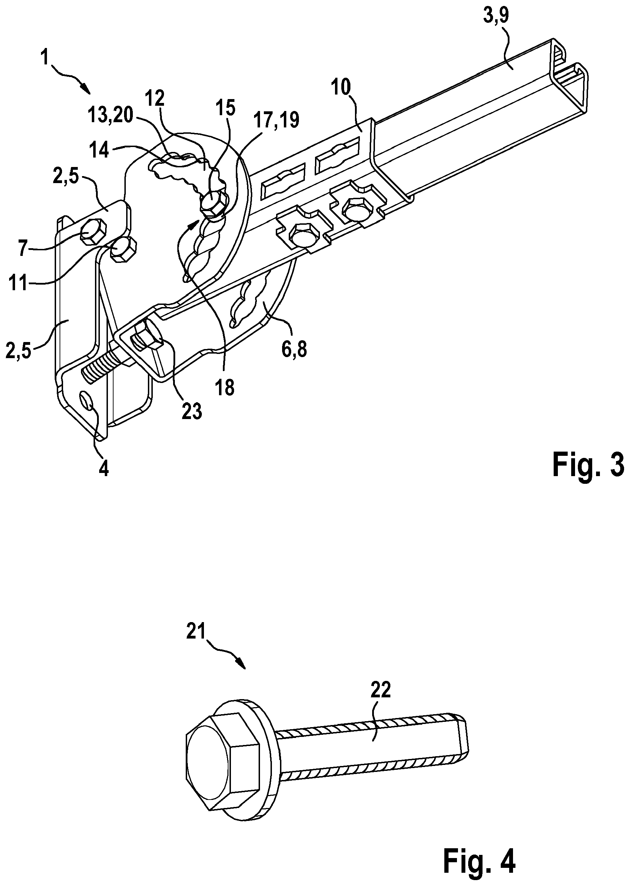

Auf einem Schraubenschaft 16 der dritten Schraube 15 sind zwei Lochscheiben 17 angeordnet, deren Außendurchmesser so groß ist wie ein Durchmesser der kreisförmigen Verbreiterungen 13 der kreisbogenförmigen Langlöcher 12 in den Seitenwänden 8 der Wippe 6, so dass sich die dritte Schraube 15 nicht in einer Längsrichtung der Langlöcher 12 bewegen lässt, wenn sich die Lochscheiben 17 in deckungsgleichen Verbreiterungen 13 der Langlöcher 12 befinden. Diese Stellung zeigen die Figuren 1 und 3. Der Ausleger 3 ist in dieser Stellung schwenkfest an der Wippe 6 gehalten. Die Langlöcher 12 mit den Verbreiterungen 13, die dritte Schraube 15, die die Langlöcher 12 quer durchsetzt, und die Lochscheiben 17 auf dem Schraubenschaft 16 der dritten Schraube 15 bilden ein Gesperre 18, mit dem eine Winkelstellung des Auslegers 3 in Bezug auf die Wippe 6 bzw. in Bezug auf das Grundteil 2 in Stufen bzw. in Winkelschritten einstellbar und der Ausleger 3 in der jeweiligen Winkelstellung festlegbar ist. Die dritte Schraube 15 mit den Lochscheiben 17 bilden Riegel 19 und die Verbreiterungen 13 des Langlochs 12 bilden Festlager 20 für die Lochscheiben 17 bzw. die Riegel 19.

Nach einem Lockern der nicht sichtbaren Mutter, die zur Sicherung auf die dritte Schraube 15 geschraubt ist - die Mutter kann auch vollständig abgeschraubt werden, was aber nicht erforderlich ist -, lässt sich die dritte Schraube 15 ein Stück weit zur Seite ihres Schraubenkopfs herausziehen, wie es Figur 2 zeigt. Die Lochscheiben 17 lassen sich seitlich aus den Langlöchern 12 heraus bewegen und die dritte Schraube 15 durch die Engstellen 14 hindurch in der Längsrichtung der Langlöcher 12 bewegen. Dabei schwenkt der Ausleger 3. Er wird in einer Winkelstellung festgelegt, wenn sich der Schraubenschaft 16 der dritten Schraube 15 in einer Mitte zweier deckungsgleicher Verbreiterungen 13 der beiden Langlöcher 12 befindet, indem die dritte Schraube 15 in ihrer Längsrichtung bis zu einer Anlage ihres Schraubenkopfs an einer Seitenwand 8 der Wippe 6 verschoben und die Lochscheiben 17 in die beiden deckungsgleichen Verbreiterungen 13 der beiden Langlöcher 12 eingebracht werden. Die nicht sichtbare Mutter auf der dem Schraubenkopf gegenüberliegenden Seite der dritten Schraube 15 wird zur Sicherung wieder auf- bzw. festgeschraubt. Die dritte Schraube 15 bzw. ihr Schraubenschaft 16 kann auch als Führung für die Lochscheiben 17, die die Riegel 19 des Gesperres 18 bilden, aufgefasst werden. Diese Führung durchsetzt die Langlöcher 12 und führt die die Riegel 19 bildenden Lochscheiben 17 in die Verbreiterungen 13 der Langlöcher 12 hinein und aus ihnen heraus bewegbar.

Einen alternativen Riegel zeigt Figur 4: ein Schraubenschaft dieser alternativen Schraube 21 weist einen Durchmesser auf, der so groß wie der Durchmesser der Verbreiterungen 13 der Langlöcher 12 ist. Auf einer oder parallel zu einander gegenüberliegenden Seiten weist der Schraubenschaft ebene Abflachungen 22 auf, deren Abstand voneinander nicht größer als eine Breite der Engstellen 14 der Langlöcher 12 ist. Diese alternative Schraube 21, die anstelle der dritten Schraube 15 durch die Langlöcher 12 in den Seitenwänden 8 der Wippe 6 und die Rundlöcher in den Seitenwänden der Aufnahme 10 des Auslegers 3 gesteckt wird, hält unverschieblich in deckungsgleichen Verbreiterungen 13 der Langlöcher 12, wenn die Abflachungen 22 quer zu den Langlöchern 12 ausgerichtet sind. Der Ausleger 3 ist winkelfest in der Wippe 6 gehalten. Durch eine Vierteldrehung der alternativen Schraube 21 werden die Abflachungen 22 in Längsrichtung der Langlöcher 12 gedreht. In dieser Stellung kann die alternative Schraube 21 durch die Engstellen 14 der Langlöcher 12 durchtreten und der Ausleger 3 verschwenkt werden.

Mit Abstand von der ersten Schraube 7, die die Schwenkachse der Wippe 6 am Grundteil 2 definiert, ist eine Stellschraube 23 durch die Grundseite der Wippe 6 geschraubt, die sich an der Grundseite des Grundteils 2 abstützt. Durch Verdrehen der Stellschraube 23 lässt sich die Wippe 6 und mit ihr der Ausleger 3 stufenlos in Bezug auf das Grundteil 2 der erfindungsgemäßen, winkelverstellbaren Konsole 1 schwenken. Das Gesperre 18 ermöglicht eine schnelle Winkelverstellung des Auslegers 3 in Stufen bzw. Winkelschritten und die Stellschraube 23 ermöglicht eine stufenlose Winkelverstellung innerhalb der Stufen, so dass der Ausleger 3 auf einem Winkelbereich, der von den kreisbogenförmigen Langlöchern 12 begrenzt wird, in jeden beliebigen Winkel einstellbar ist. Wird das Grundteil 2 beispielsweise an einer bogenförmigen Tunnelwand befestigt, lässt sich der Ausleger 3 immer horizontal ausrichten, sofern der von den Langlöchern 12 begrenzte Winkelbereich nicht überschritten ist.

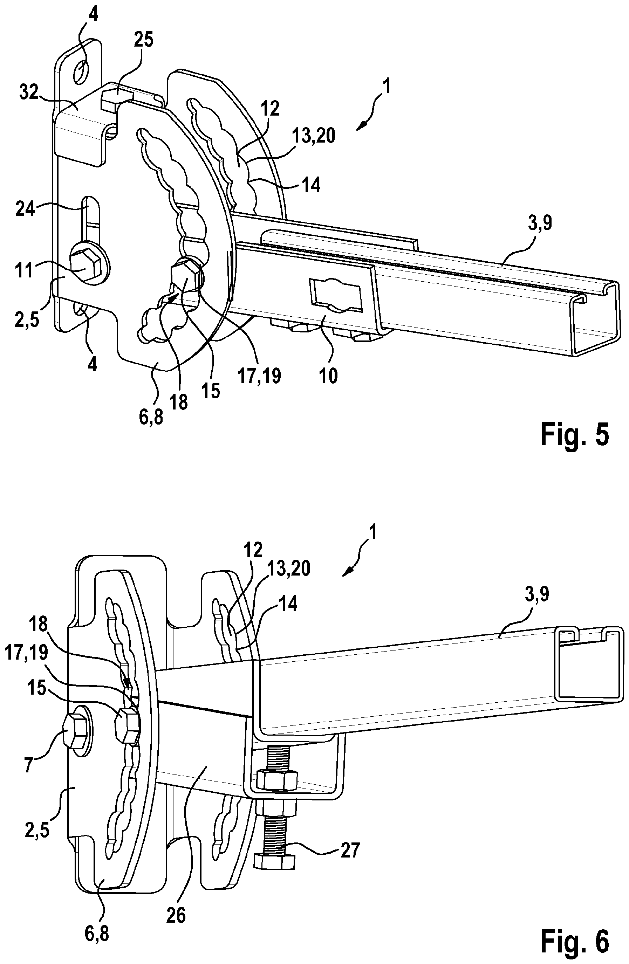

Bei der in Figur 5 gezeichneten, erfindungsgemäßen, winkelverstellbaren Konsole 1 fehlt die Wippe 6 und der Ausleger 3 ist schwenkbar am Grundteil 2 gelagert. Die kreisbogenförmigen Langlöcher 12 des Gesperres 18 sind deckungsgleich in den Seitenwänden 5 des Grundteils 2 angebracht. Wie in Figuren 1 bis 3 weisen die Langlöcher 12 in Figur 5 kreisförmige Verbreiterungen 13 und Engstellen 14 zwischen den Verbreiterungen 13 auf. Ebenfalls wie in Figuren 1 bis 3 durchsetzt eine dritte Schraube 15 die Langlöcher 12 und deckungsgleiche Rundlöcher in Seitenwänden der Aufnahme 10 des Auslegers 3. Auf dem Schraubenschaft 16 der dritten Schraube 15 sind Lochscheiben 17 als Riegel 19 des Gesperres 18 angeordnet, deren Außendurchmesser so groß wie ein Durchmesser der Verbreiterungen 13 der Langlöcher 12 ist. Befinden sich die Lochscheiben 17 in deckungsgleichen Verbreiterungen 13 der Langlöcher 12, ist die dritte Schraube 15 gegen eine Bewegung in Längsrichtung der Langlöcher 12 gehalten. Werden die Lochscheiben 17 aus den Verbreiterungen 13 der Langlöcher 12 heraus bewegt, lässt sich die dritte Schraube 15 und mit ihr die Aufnahme 10 des Auslegers 3 in der Längsrichtung der Langlöcher 12 bewegen. Dadurch ist ein Schwenken des Auslegers 3 in Stufen bzw. in Winkelschritten und ein Feststellen des Auslegers 3 in der jeweiligen Winkelstellung möglich. Anders als in Figuren 1 bis 3 bildet in Figur 5 die dritte Schraube 15, die die Langlöcher 12 durchsetzt, ein Schwenklager des Auslegers 3 der erfindungsgemäßen Konsole 1, um das der Ausleger 3 schwenkt.

Nahe einem der Grundseite des Grundteils 2 nahen Ende der Aufnahme 10 des Auslegers 3 durchsetzt eine zweite Schraube 11 deckungsgleiche, gerade Langlöcher 24 in den Seitenwänden 5 des Grundteils 2 und deckungsgleiche Rundlöcher in Seitenwänden der Aufnahme 10 des Auslegers 3. Die geraden Langlöcher 24 verlaufen parallel zur Grundseite des Grundteils 2, so dass das dem Grundteil 2 nahe Ende der Aufnahme 10 des Auslegers 3 parallel zur Grundseite des Grundteils 2 beweglich ist. Die zweite Schraube 11 ist mit einer Mutter gesichert, die auf einer einem Schraubenkopf gegenüberliegenden Seite auf die Schraube 11 geschraubt ist. Die Mutter ist in der Zeichnung verdeckt und deswegen nicht sichtbar. Eine Stellschraube 25 ist zwischen den Seitenwänden 5 des Grundteils 2 parallel zur Grundseite des Grundteils 2 durch eine Stirnwand 32 des Grundteils 2 geschraubt. Die Stellschraube 25 sitzt auf der zweiten Schraube 11 auf, die durch die geraden Langlöcher 24 in den Seitenwänden 5 des Grundteils 2 und die Rundlöcher in den Seitenwänden der Aufnahme 10 des Auslegers 3 gesteckt ist. Durch Drehen der Stellschraube 25 lässt sich die zweite Schraube 11 und damit das dem Grundteil 2 nahe Ende der Aufnahme 10 des Auslegers 3 parallel zur Grundseite des Grundteils 2 bewegen und dadurch der Ausleger 3 stufenlos um die dritte Schraube 15 schwenken, die die kreisbogenförmigen Langlöcher 12 durchsetzt.

Im Übrigen ist die Konsole 1 aus Figur 5 gleich ausgebildet und funktioniert in gleicher Weise wie die in Figuren 1 bis 3 gezeichnete Konsole 1, und es wird ergänzend zur Erläuterung der Figur 5 auf die obigen Erläuterungen der Figuren 1 bis 3 verwiesen. Gleiche Bauteile sind in Figur 5 mit denselben Bezugszahlen wie in Figuren 1 bis 3 bezeichnet.

Die in Figur 6 gezeichnete, erfindungsgemäße, winkelverstellbaren Konsole 1 weist wieder ein U-Profil als Wippe 26 auf, das allerdings - anders als in Figuren 1 bis 3 - parallel oder in einem spitzen Winkel zur Aufnahme 10 des Auslegers 3 und nicht parallel oder in einem spitzen Winkel zur Grundseite des Grundteil 2 verläuft. Wie in Figuren 1 bis 3 ist in Figur 6 die Wippe 26 um eine erste Schraube 7 schwenkbar, die durch deckungsgleiche Löcher in den Seitenwänden 5 des Grundteil 2, der Wippe 26 und der Aufnahme 10 des Auslegers 3 gesteckt und mit einer Mutter gesichert, die auf einer einem Schraubenkopf gegenüberliegenden Seite auf die erste Schraube 7 geschraubt ist. Die Mutter ist verdeckt und nicht sichtbar.

Ein Gesperre 18 mit deckungsgleichen, kreisbogenförmig um die erste Schraube 7 verlaufenden kreisbogenförmigen Langlöchern 12, die kreisförmige Verbreiterungen 13 und Engstellen 14 zwischen den Verbreiterungen 13 aufweisen, ist in den Seitenwänden 5 des Grundteils 2 vorgesehen. Eine die Langlöcher 12 durchsetzende dritte Schraube 15, auf deren Schraubenschaft Lochscheiben 17 als Riegel 19 angeordnet sind, durchsetzt Rundlöcher in Seitenwänden der Wippe 26. Dadurch ist die Wippe 26 in Stufen bzw. in Winkelschritten schwenkbar. Eine Stellschraube 27 ist nahe einem dem Grundteil 2 fernen Ende durch eine Grundseite der Wippe 26 geschraubt. Die Aufnahme 10 des Auslegers 3 sitzt auf der Stellschraube 27 auf, so dass durch Drehen der Stellschraube 27 der Ausleger 3 stufenlos um die erste Schraube 7 in den Rundlöchern in den Seitenwänden 5 des Grundteils 2 schwenkbar ist.

Im Übrigen ist die erfindungsgemäße Konsole 1 aus Figur 6 gleich ausgebildet und funktioniert in gleicher Weise wie die in Figuren 1 bis 3 gezeichnete Konsole 1. Zur Erläuterung der Figur 6 werden die obigen Erläuterungen der Figuren 1 bis 3 in Bezug genommen. Gleiche Bauteile sind auch in Figur 6 mit gleichen Bezugszahlen wie in Figuren 1 bis 3 bezeichnet.

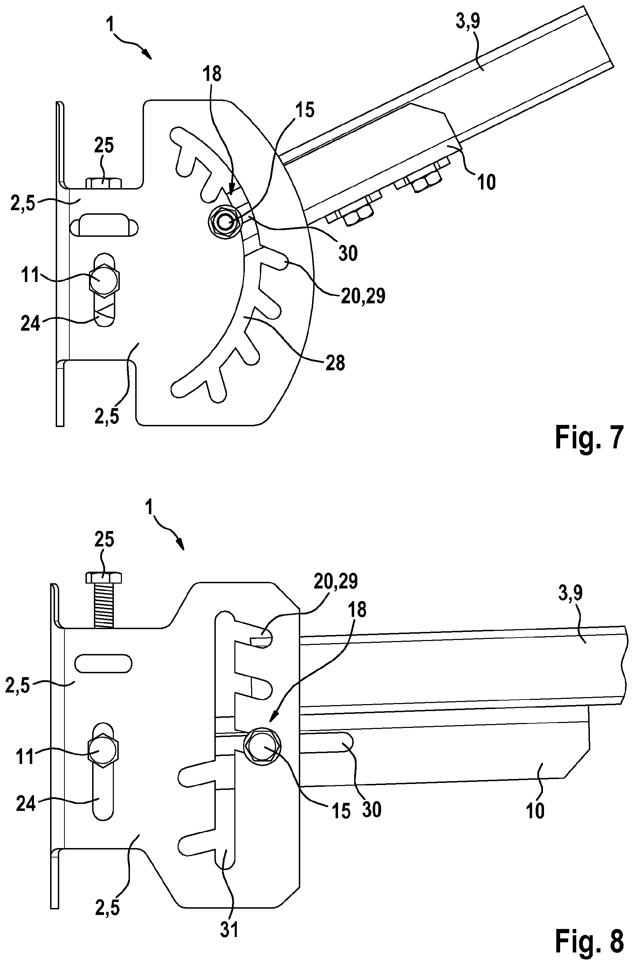

Bei der in Figur 7 gezeichneten, erfindungsgemäßen, winkelverstellbaren Konsole 1 verläuft ein Langloch 28 eines Gesperres 18 zwar ebenfalls kreisbogenförmig um eine zweite Schraube 11, die durch deckungsgleiche, gerade Langlöcher 24 in Seitenwänden 5 des Grundteils 2 und durch deckungsgleiche Rundlöcher in der Aufnahme 10 des Auslegers 3 gesteckt ist. Allerdings weist das kreisbogenförmige Langloch 28 keine Verbreiterungen und Engstellen auf, sondern es zweigen Abzweigungen 29 als Festlager 20 des Gesperres 18 schräg von den kreisbogenförmigen Langlöchern 28 ab. Dabei zweigen Abzweigungen 29, die sich in einer vorgesehenen Befestigungslage der Konsole 1 oberhalb des Auslegers 3 befinden, wenn der Ausleger 3 rechtwinklig zur Grundseite des Grundteil 2 absteht, innen, zum Grundteil 2 hin gerichtet, und Abzweigungen 29, die sich unterhalb des Auslegers 3 befinden, wenn der Ausleger 3 rechtwinklig zur Grundseite des Grundteil 2 absteht, nach außen, vom Grundteil 2 weg gerichtet, vom kreisbogenförmigen Langloch 28 ab. Der Ausleger 3 lässt sich in Stufen bzw. Winkelschritten schwenken, indem eine dritte Schraube 15, die die kreisbogenförmigen Langlöcher 28 durchsetzt, aus den Abzweigungen 29 heraus in die kreisbogenförmigen Langlöcher 28 und durch die Langlöcher 28 in andere, deckungsgleiche Abzweigungen 29 bewegt wird. Um die dritte Schraube 15 in die Abzweigungen 29 hinein und aus ihnen heraus bewegen zu können, weisen die Seitenwände der Aufnahme 10 des Auslegers 3 in Längsrichtung der Aufnahme 10 und des Auslegers 3 verlaufende gerade Langlöcher 30 auf. In diesem Fall bildet die dritte Schraube 15 selbst den Riegel des Gesperres 18.

Eine Wippe fehlt in Figur 7 und ein der Grundseite des Grundteils 2 nahes Ende der Aufnahme 10 des Auslegers 3 ist wie in Figur 5 mit einer Stellschraube 25 parallel zur Grundseite des Grundteils 2 bewegbar. Dadurch ist eine stufenlose Winkelverstellung des Auslegers 3 möglich.

In Figur 8 ist ein Langloch 31 des Gesperres 18 gerade und verläuft parallel zur Grundseite des Grundteils 2. Wie in Figur 7 zweigen Abzweigungen 29 schräg vom geraden Langloch 31 des Gesperres 18 ab. Eine dritte Schraube 15 durchsetzt die geraden Langlöcher 31 des Gesperres 18 und gerade Langlöcher 30 in der Aufnahme 10 des Auslegers 3. Durch Bewegen der dritten Schraube 15 im Langloch 31 des Gesperres 18 lässt sich der Ausleger 3 schwenken und durch Bewegen in deckungsgleiche Abzweigungen 29 in der jeweiligen Winkelstellung festlegen. Ein stufenloses Schwenken des Auslegers 3 ist mit einer Stellschraube 25 wie in Figur 7 möglich.

Im Übrigen sind die Konsolen 1 aus Figuren 7 und 8 gleich ausgebildet und funktionieren in gleicher Weise wie die Konsole 1 aus Figur 5. Zur Erläuterung der Figuren 7 und 8 werden ergänzend die Erläuterungen der Figur 5 in Bezug genommen.

### Bezugszeichenliste

- 1: winkelverstellbare Konsole
- 2: Grundteil
- 3: Ausleger
- 4: Loch
- 5: Seitenwand des Grundteils
- 6: Wippe
- 7: erste Schraube
- 8: Seitenwand der Wippe 6
- 9: Montageschiene
- 10: Aufnahme
- 11: zweite Schraube
- 12, 28: kreisbogenförmiges Langloch
- 13: Verbreiterung
- 14: Engstelle
- 15: dritte Schraube
- 16: Schraubenschaft
- 17: Lochscheibe
- 18: Gesperre
- 19: Riegel
- 20: Festlager
- 21: alternative Schraube
- 22: Abflachung
- 23, 25, 27: Stellschraube
- 24: gerades Langloch
- 26: Wippe
- 29: Abzweigung
- 30: gerades Langloch der Aufnahme 10
- 31: gerades Langloch des Gesperres 18
- 32: Stirnwand

## Patentansprüche

1. Winkelverstellbare Konsole (1), mit einem an einer Wand befestigbaren Grundteil (2) und einem vertikal in Stufen in Bezug auf das Grundteil (2) schwenkbaren Ausleger (3), **dadurch gekennzeichnet, dass** die Konsole (1) eine stufenlose Winkeleinstellung zu einem vertikalen Schwenken des Auslegers (3) aufweist.

2. Winkelverstellbare Konsole nach Anspruch 1, **dadurch gekennzeichnet, dass** die Konsole (1) ein Gesperre (18) mit einem Riegel (19) und Aufnahmen (20) für den Riegel (19) für eine Schwenkeinstellung des Auslegers (3) in Stufen aufweist.

3. Winkelverstellbare Konsole nach Anspruch 2, **dadurch gekennzeichnet, dass** das Gesperre (18) ein Langloch (12) mit Verbreiterungen (13) als Aufnahmen (20) für den Riegel (19) aufweist, die durch Engstellen (14) verbunden sind.

4. Winkelverstellbare Konsole nach Anspruch 3, **dadurch gekennzeichnet, dass** das Gesperre (18) eine Führung für den Riegel (19) aufweist, die das Langloch (12) durchsetzt, so dass der Riegel (19) in die Verbreiterungen (13) des Langlochs (12) hinein und aus ihnen heraus bewegbar ist.

5. Winkelverstellbare Konsole nach Anspruch 2, **dadurch gekennzeichnet, dass** das Gesperre (18) ein Langloch (28; 30) mit Abzweigungen (29) als Aufnahmen für den Riegel aufweist.

6. Winkelverstellbare Konsole nach einem der vorhergehenden Ansprüche, **dadurch gekennzeichnet, dass** die Konsole (1) eine Wippe (6; 26) aufweist, die schwenkbar in Bezug auf das Grundteil (2) ist, und dass der Ausleger (3) schwenkbar in Bezug auf die Wippe (6; 26) ist.

7. Winkelverstellbare Konsole einem der Ansprüche 3 bis 5, **dadurch gekennzeichnet, dass** das Langloch (12; 28) des Gesperres (18) in einem Bogen um eine Schwenkachse des Auslegers (3) oder der Wippe (6; 26) oder gerade verläuft.

8. Winkelverstellbare Konsole nach einem der vorhergehenden Ansprüche, **dadurch gekennzeichnet, dass** der Ausleger (3) in seiner Längsrichtung verschieblich und schwenkbar gelagert ist.

9. Winkelverstellbare Konsole nach einem der vorhergehenden Ansprüche, **dadurch gekennzeichnet, dass** die Konsole (1) eine Stellschraube (23; 25; 27) für die stufenlose Winkeleinstellung des Auslegers (3) aufweist.

10. Winkelverstellbare Konsole nach Anspruch 6, **dadurch gekennzeichnet, dass** die Stellschraube (23; 25; 27) senkrecht oder parallel zum Ausleger (3) angeordnet ist.
